## Europäisches Patentamt
## European Patent Office
## Office européen des brevets

(19)

(11) Veröffentlichungsnummer: **0 019 255**
**B1**

(12) **EUROPÄISCHE PATENTSCHRIFT**

(45) Veröffentlichungstag der Patentschrift:
**14.03.84**

(51) Int. Cl.³: **A 01 B 1/20**

(21) Anmeldenummer: **80102619.6**

(22) Anmeldetag: **12.05.80**

(54) **Kombinationsgartengerät.**

(30) Priorität: **15.05.79 DE 7914049 U**

(43) Veröffentlichungstag der Anmeldung:
**26.11.80 Patentblatt 80/24**

(45) Bekanntmachung des Hinweises auf die Patenterteilung:
**14.03.84 Patentblatt 84/11**

(84) Benannte Vertragsstaaten:
**AT BE CH GB LI NL**

(56) Entgegenhaltungen:
**DE - C - 582 827**
**DE - C - 622 477**
**DE - C - 657 246**
**FR - A - 974 898**
**FR - A - 2 285 794**
**GB - A - 600 348**
**US - A - 1 371 706**
**US - A - 1 960 894**
**US - A - 2 387 748**
**US - A - 3 340 937**

(73) Patentinhaber: **Wolf-Geräte GmbH, Gregor-Wolf-Strasse Postfach 860 und 880, D-5240 Betzdorf/Sieg (DE)**

(72) Erfinder: **Kolb, Walter, Martin-Luther-Strasse, D-5240 Betzdorf (DE)**

(74) Vertreter: **Wallach, Curt, Dipl.-Ing. et al, Postfach 920, D-8000 München 33 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Kombinationsgartengerät

Die Erfindung bezieht sich auf ein Kombinationsgartengerät mit einem Jäter in Gestalt eines Messerbügels, der an einer mit Stiel versehenen Traggabel ansetzt und mit dem ein weiteres Gerät, z. B. eine Bodenbearbeitungswalze verbindbar ist, wobei das weitere Gerät einen Achsträgerbügel aufweist, dessen Querschenkel lösbar an einem fest mit der Traggabel verbundenen Anschlagflansch festlegbar ist.

Ein solches Kombinationsgartengerät ist aus der US-A-19 60 894 bekannt. Hierbei weist die Traggabel als Anschlußflansch ein starr die Gabelarme verbindendes Winkeleisen auf, an dem der querverlaufende Steg des Achsträgerbügels mit Schrauben festlegbar ist, die durch Löcher des Querschenkels des Achsträgerbolzens gesteckt und in Gewindelöcher des den Anschlußflansch bildenden Winkeleisens eingeschraubt sind. Ein weiterer Gewindezapfen mit Flügelmutter verbindet die beiden Teile in der Mitte und trägt eine Stützfeder, deren Enden an den Schenkeln des Messerbügels angreifen, um das bandförmig ausgebildete Messer nach außen vorzuspannen.

Diese Art der Befestigung ist sehr aufwendig und zeitraubend und erfordert die Zuhilfenahme von Werkzeugen. Dabei besteht die Gefahr, daß die Schrauben einrosten und dann nicht oder nur schwer gelöst werden können. Außerdem können diese Befestigungsschrauben verlorengehen.

Der Erfindung liegt daher die Aufgabe zugrunde, ein Kombinationsgartengerät zu schaffen, bei welchem die weiteren Geräte mit wenigen Handgriffen vom Grundgerät in Gestalt des Jäters gelöst bzw. an diesem festgelegt werden können.

Erfindungsgemäß wird die gestellte Aufgabe bei einem Kombinationsgartengerät der eingangs genannten Bauart dadurch gelöst, daß der Anschlußflansch zwei von der Traggabel nach innen einstehende Abschnitte aufweist, an die der Achsträgerbügel mit seitlichen Stegabschnitten anlegbar ist, daß diese Stegabschnitte über ein zwischen die Flanschabschnitte einsetzbares U-Stück verbunden sind, dessen Schenkel einen mit einem Griffhebel verbundenen Klemmbolzen in Langlöchern lagern, daß der Klemmbolzen zu seiner Achse exzentrische Spannocken trägt, die bei Verschwenkung des Griffhebels an dem parallel zum Klemmbolzen verlaufenden Verbindungssteg des U-Stücks des weiteren Gerätes abrollen, und daß der Klemmbolzen mit seinen Enden an der den Stegabschnitten gegenüberliegenden Seite der Flanschabschnitte angreift und den Achsträgerbügel am Jäter festklemmt.

Durch die Erfindung wird erreicht, daß einfach durch Verschwenken des Griffhebels die Klemmverbindung gelöst oder hergestellt werden kann. Ein Lösen und Zusammensetzen kann bei dem erfindungsgemäßen Kombinationsgartengerät selbst dann noch leicht und ohne Kraftaufwand und ohne Zuhilfenahme eines Werkzeuges bewerkstelligt werden, wenn eine bestimmte Werkzeugkombination lange zusammengeklemmt war und die Teile verrostet oder verschmutzt sind.

Das erfindungsgemäße Kombinationsgartengerät besitzt keinerlei verlierbare Teile, und der Klemmverschluß ist selbst dann leicht zu lösen bzw. zu verriegeln, wenn die Einzelteile verschmutzt, verkrustet oder verklebt sind. Eine leichte Handhabung ist dadurch gewährleistet, daß über den Griffhebel mit einem hohen Übersetzungsverhältnis auf die Spannocken eingewirkt werden kann, die ein Zusammenpressen der Anschlußteile bewirken.

Dadurch daß gemäß Anspruch 2 die Anschlußflansche nach innen weisende Abkröpfungen besitzen, wird eine definierte schmale Anladefläche für die Klemmbolzen gebildet, was die Spannfunktion verbessert.

Durch die Ausbildung gemäß Anspruch 3 wird erreicht, daß die Klemmfunktion mit nur wenigen Bauteilen verwirklicht werden kann, weil die Gabelarme des Klemmhebels selbst die Spannocken bilden.

Nachstehend werden Ausführungsbeispiele der Erfindung anhand der Zeichnung beschrieben. In der Zeichnung zeigt

Fig. 1 eine Seitenansicht einer mit dem Pendeljäter verbundenen Sternradwalze,

Fig. 2 eine Draufsicht auf das in Fig. 1 dargestellte Kombinationsgartengerät,

Fig. 3 eine Seitenansicht einer mit dem Jäter verbundenen Stachelwalze in Arbeitsstellung,

Fig. 4 eine Ansicht des Geräts nach Fig. 3 in Richtung des Pfeils IV betrachtet,

Fig. 5 eine Draufsicht des Achsträgerbügels mit Schnellspannvorrichtung, der der Sternradwalze gemäß Fig. 1 und 2 und der Stachelwalze gemäß Fig. 3 und 4 gemeinsam ist,

Fig. 6 einen Schnitt nach der Linie VI-VI gemäß Fig. 5.

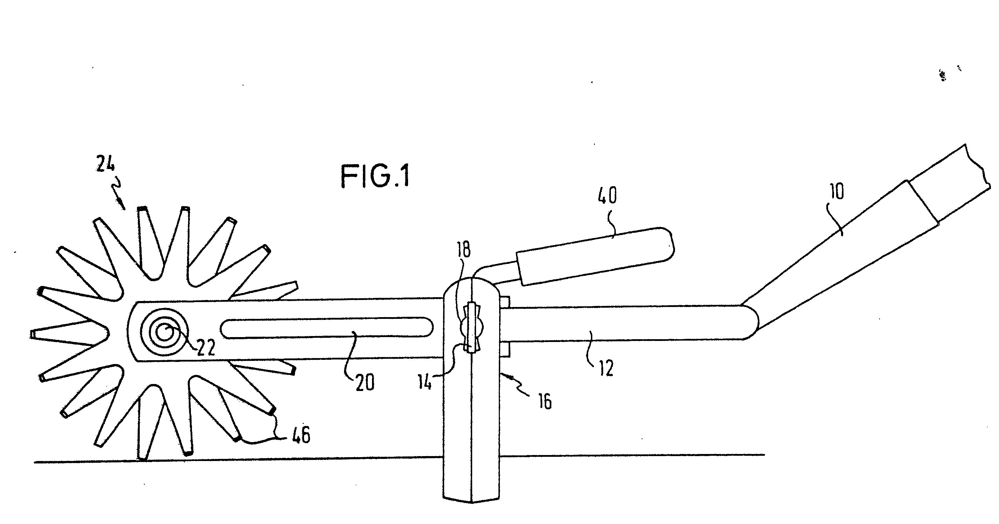

Der Grundbestandteil des Kombinationsgeräts wird von einem Jäter gebildet, dessen Traggabel 12 eine Stieltülle 10 zum Einsetzen eines Stiels aufweist. An die freien Enden der Gabelarme sind abgewinkelte Flacheisen 14 angeschweißt, die zusammen einen Anschlußflansch bilden. Über die nach außen weisenden Enden dieser Flacheisen 14 sind die beiden Schenkel eines U-förmigen Messerbügels 16 mit den aus Fig. 1 ersichtlichen Ausnehmungen 18 aufgesetzt. Diese Ausnehmungen 18 ermöglichen eine pendelnde Bewegung des Messerbügels gegenüber der Traggabel 12, wobei das den horizontalen Schenkel des Bügels 16 bildende Messer in pendelnder Arbeitsweise einen waagerechten Schnitt durchführt.

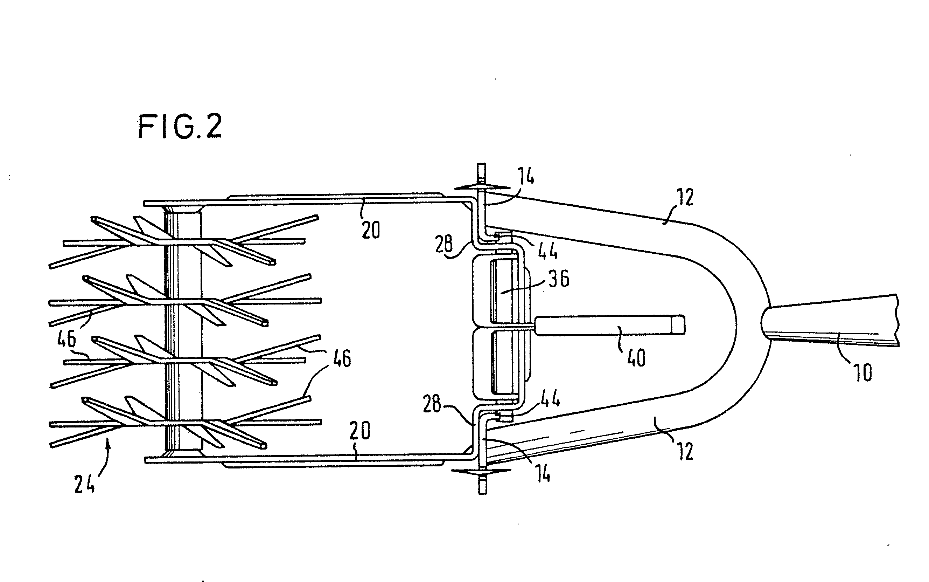

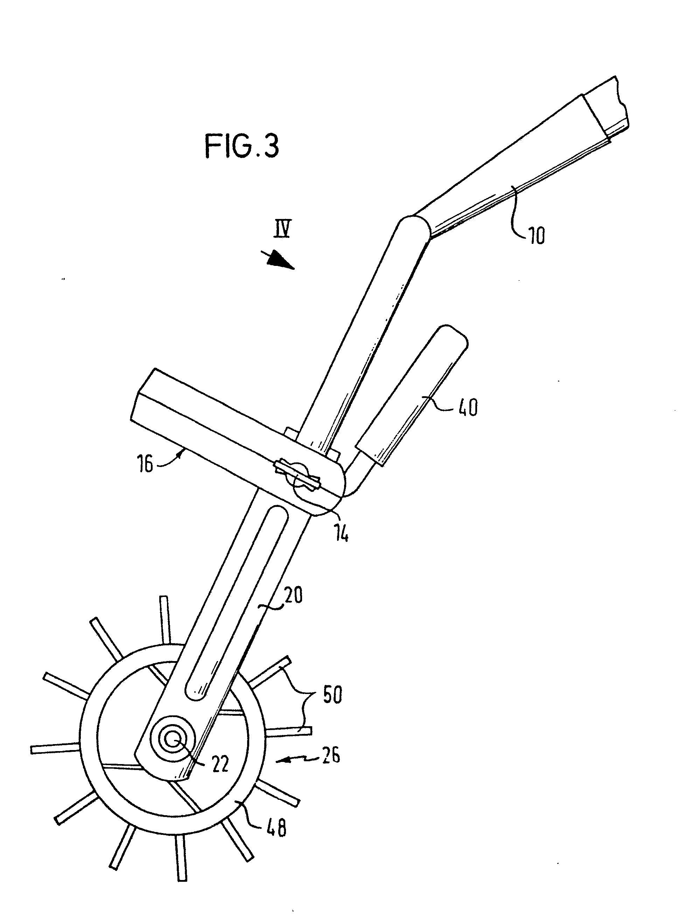

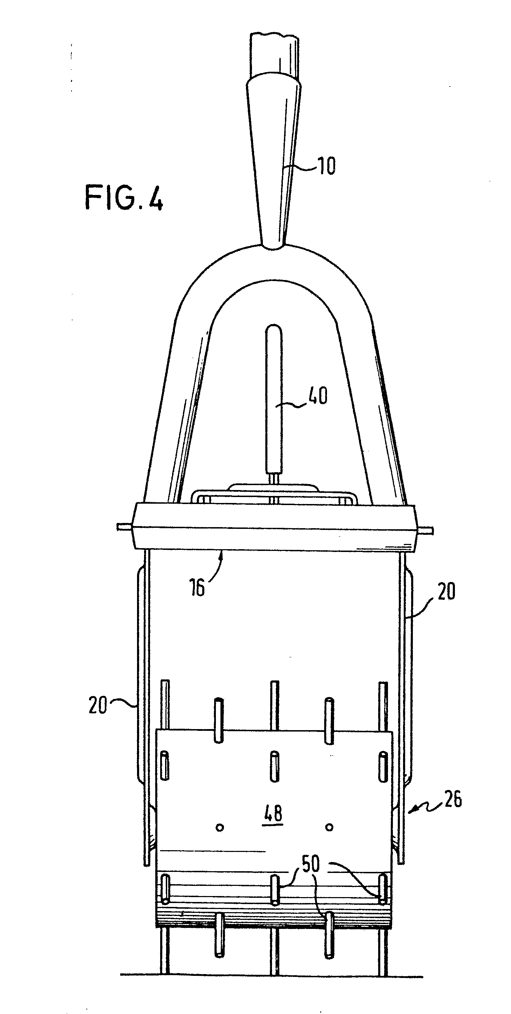

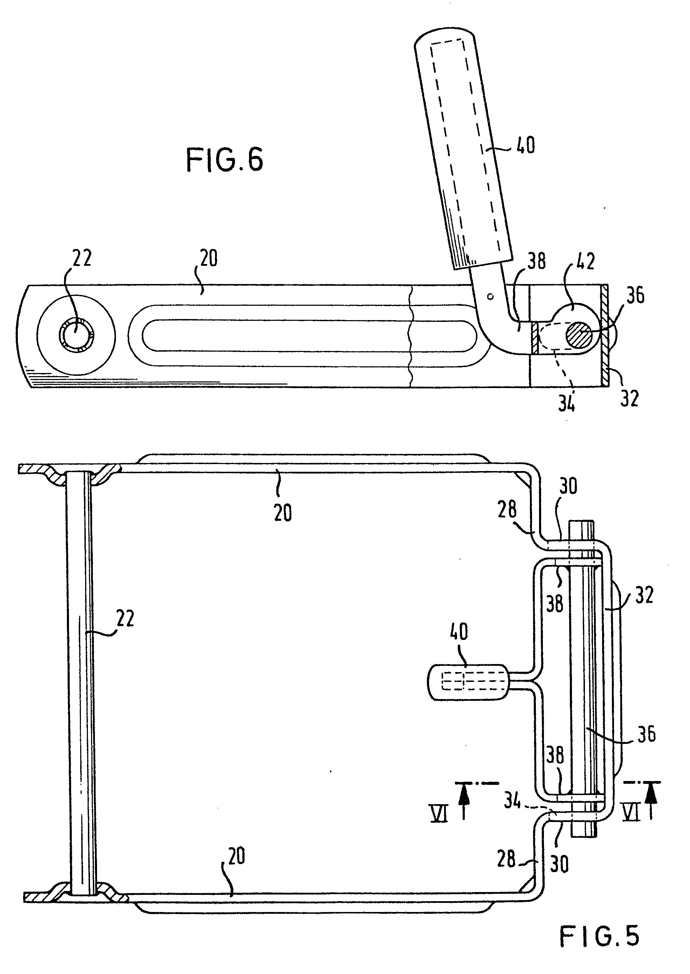

An diesen Jäter ist entweder eine Sternradwalze gemäß Fig. 1 und 2 oder eine Stachelwalze gemäß Fig. 3 und 4 oder auch ein anderes Gerät ansetzbar, denen der aus Fig. 5 und 6 ersichtliche Achsträgerbügel mit Spannvorrichtung gemeinsam ist. Die freien Enden der Schenkel 20 dieses Achsträgerbügels tragen die Laufachse 22 für die Sternradwalze 24 bzw. Stachelwalze 26. Der Verbindungssteg dieses Bügels weist zwei seitliche, an den Tragarmen 20 ansetzende Stegabschnitte 28 und ein U-Stück auf, das von den von den Stegabschnitten 28 abgebogenen Schenkeln 30 und einem diese verbindenden Steg 32 gebildet ist. In den Schenkeln 30 sind Langlöcher 34 ausgebildet, in die die beiden Enden eines Klemmbolzens 36 einstehen, der mit Gabelarmen 38 verschweißt ist, die einen Griffhebel 40 tragen. Die Gabelarme 38 weisen je einen bezüglich der Achse des Bolzens 36 exzentrisch ausgebildeten Spannocken 42 auf, der sich gegen die Innenseite des Bügelstegs 32 abstützt. Bei Verschwenkung des Griffhebels 40 gemäß Fig. 6 im Uhrzeigersinn reitet der Nocken 42 auf dem Steg 32 und verschiebt infolge des sich vergrößernden wirksamen Durchmessers den Bolzen 36 in den Langlöchern 34 nach links, wodurch, wie insbesondere aus Fig. 2 erkennbar ist, eine Verspannung zustande kommt. Zu diesem Zweck sind die Flacheisen 14 des Jäters dem Achsträgerbügel mit den Stegabschnitten 28 so angepaßt, daß sich diese Teile 14 und 28 flach aneinanderlegen können. Jedes Flacheisen 14 ist innen mit einer rechtwinkligen Abkröpfung 44 versehen und das Ende dieser Abkröpfung liegt jeweils dem Ende des durch den Schenkel 30 vorstehenden Klemmbolzen 36 an. Beim Verschwenken des Griffhebels 40 im Uhrzeigersinn gemäß Fig. 6 wird demgemäß jedes der Flacheisen 14 zwischen dem Klemmbolzen 36 und den Stegabschnitten 28 sicher verspannt, und es kann jederzeit bei Bedarf durch Verschwenken des Griffhebels 40 gemäß Fig. 6 im Gegenuhrzeigersinn ein Lösen der Geräte vorgenommen werden.

Die Gabel 12 ist gegenüber der Tülle 10 in einem solchen Winkel angestellt, daß das Kombinationsgerät gemäß Fig. 1 und 2 mit beiden Werkzeugen wirksam werden kann, und diese Gebrauchsstellung zeigt Fig. 1. Nach Drehen des Stiels um 180° kann das Gerät entsprechend der Darstellung nach Fig. 3 aber auch in der Weise benutzt werden, daß nur die Sternradwalze bzw. die Stachelwalze am Boden wirksam werden. In gleicher Weise können auch andere Werkzeuge in Verbindung mit dem Jäter benutzt werden und an diesen angeschlossen werden.

Eine Besonderheit der in den Figuren 1 und 2 dargestellten Sternradwalze besteht darin, daß die in Umfangsrichtung aufeinanderfolgenden Zinken 46 jeweils nach der einen bzw. anderen Seite bzw. gar nicht abgebogen sind, derart, daß sich ein über die Breite und Länge völlig einheitliches Stichmuster dieser Zinken 46 ergibt.

Die Stachelwalze 26 gemäß Fig. 3 und 4 besteht aus einem massiven Walzenkörper 48, in den in radialer Richtung Stifte oder Stacheln 50 eingesetzt sind.

Gemäß dem vorstehend beschriebenen und dargestellten Ausführungsbeispiel wurde als Träger für die verschiedenen Zweitwerkzeuge ein Jäter in Gestalt eines pendelnd aufgehängten Messerbügels beschrieben. Es ist jedoch auch möglich, die Zusatzgeräte an einem anderen mit entsprechenden Anschlußflanschen versehenen Gerät anzubauen, beispielsweise an einem Lüfter, einem Kultivator oder einem ähnlichen Gerät.

## Patentansprüche

1. Kombinationsgartengerät mit einem Jäter in Gestalt eines Messerbügels (16), der an einer mit Stiel versehenen Traggabel (12) ansetzt und mit dem ein weiteres Gerät, z. B. eine Bodenbearbeitungswalze (24; 26) verbindbar ist, wobei das weitere Gerät einen Achsträgerbügel (20; 28; 30; 32) mit zwei Tragarmen (20) aufweist, dessen Verbindungsteil (28; 30; 32) lösbar an einem fest mit der Traggabel (12) verbundenen Anschlußflansch (14) festlegbar ist, dadurch gekennzeichnet, daß der Anschlußflansch (14) zwei von der Traggabel (12) nach innen einstehende Abschnitte (14) aufweist, an die der Achsträgerbügel mit im Verbindungsteil (28; 30; 32) ausgebildeten seitlichen Stegabschnitten (28) anlegbar ist, daß diese Stegabschnitte (28) über ein zwischen die Flanschabschnitte (14) einsetzbares U-Stück (30, 32) verbunden sind, dessen Schenkel (30) einen mit einem Griffhebel (40) verbundenen Klemmbolzen (36) in Langlöchern (34) lagern, daß der Klemmbolzen (36) zu seiner Achse exzentrische Spannocken (42) trägt, die bei Verschwenkung des Griffhebels (40) an dem parallel zum Klemmbolzen (36) verlaufenden Verbindungssteg (32) des U-Stücks des weiteren Geräts abrollen, und daß der Klemmbolzen (36) mit seinen Enden an der den Stegabschnitten (28) gegenüberliegenden Seite der Flanschabschnitte (14) angreift und den Achsträgerbügel am Jäter festklemmt.

2. Kombinationsgartengerät nach Anspruch 1, dadurch gekennzeichnet, daß die nach innen weisenden Enden der als Flacheisen (14) ausgebildeten Flanschabschnitte nach dem Stiel weisende rechtwinklige Abkröpfungen (44) aufweisen, an deren Stirnflächen die Enden der Klemmbolzen (36) angreifen.

3. Kombinationsgartengerät nach Anspruch 1, dadurch gekennzeichnet, daß die Spannocken (42) Teile von mit dem Klemmbolzen (36) verschweißten Gabelarmen (38) sind, deren Enden in dem Griffhebel (40) zusammengefaßt sind.

## Claims

1. Combination garden implement with a weeder in the form of a cutting hoop (16) which is fastened to a carrier fork (12) having a handle and with which a further tool, for example a ground preparation roller (24; 26), can be connected, wherein the further tool has an axle support yoke (20; 28; 30; 32) with two support arms (20) the connection part (28; 30; 32) for which is releasably securable to a connection flange (14) fixed to the carrier fork (12) characterised in that the connection flange (14) has two portions (14) which extend inwardly from the carrier fork (12) and to which the axle support yoke can be connected by lateral web portions (28) formed in the connection part (28; 30; 32); in that these web portions (28) are connected via a U-piece (30, 32) insertable between the flange portions (14), with the limbs (30) of the U-piece supporting, in elongate slots (34), a clamping bolt (36) which is connected to a lever (40); in that the clamping bolt (36) carries clamping cams (42) eccentrically of its axis which, on pivoting of the lever (40) roll off on the connection web (32) of the U-piece of the further tool, said connection webs extending parallel to the clamping bolt (36); and in that the ends of the clamping bolt (36) engage with the side of the flange portions (14) opposite to the web portions (28) and clamp the axle support yoke to the weeder.

2. Combination garden implement in accordance with claim 1, characterised in that the inwardly directed ends of the flange portions, which are constructed as flat iron bars (14), have portions (44) bent at right angles which point towards the handle, with the clamping bolt (36) engaging with the end faces of these portions (44).

3. Combination garden implement in accordance with claim 1, characterised in that the clamping cams (42) are parts of fork arms (38) which are welded onto the clamping bolt (36) and the ends of which are combined into the lever (40).

**Revendication**

1. Ustensile de jardinage combiné comprenant un sarcloir sous la forme d'un couteau-arceau (16) adapté à une fourche porteuse (12) pourvue d'un manche et avec lequel peut être combiné un autre, outil, par exemple un rouleau (24; 26) pour la culture du sol, l'outil additionnel présentant un étrier porte-arbre (20; 28; 30; 32) comprenant deux bras porteurs (20) et dont l'élément de jonction (28; 30; 32) peut être solidarisé amoviblement avec une bride d'attache (14) fixée à la fourche porteuse (12), caractérisé en ce que la bride d'attache (14) présente deux tronçons (14) orientées vers l'intérieur à partir de la fourche porteuse (12) et contre lesquels peut s'appliquer l'étrier porte-arbre par l'intermédiaire des tronçons de barre latéraux (28) constitués dans l'élément de jonction (28; 30; 32); en ce que ces tronçons de barre (28) sont reliés entre eux au moyen d'une pièce en U (30, 32) pouvants s'intercaler entre les tronçons de bride (14) et dont les branches (30) supportent, dans des trous oblongs (34), une broche de blocage (36) reliée à un levier à manche (40); en ce que la broche de serrage (36) porte des cames de serrage (42) excentrées par rapport à son axe et qui, à la suite du renversement du levier à manche (40), roulent sur la barre de jonction (32) de la pièce en U de l'outil additionnel, barre orientée parallélement à la broche de serrage (36); et en ce que la broche de serrage (36) attaque par ses extrémités la face des tronçons de bride (14) opposée aux tronçons de barre (28) et bloque étrier porte-arbre par rapport à la sarcleuse.

2. Ustensile de jardinage combiné suivant la revendication 1, caractérisé en ce que les extrémités, orientées vers l'inteérieur, des tronçons de bride constitués par des fers plats (14), présentent des parties (44) déviées à angle droit et orientées vers le manche, parties sur les surfaces en bout desquelles agissent les extrémités des broches de blocage.

3. Ustensile de jardinage combiné suivant la revendication 1, caractérisé en ce que les cames de serrage (42) constituent des portions de branches (38) d'une fourche soudées à la broche de blocage (36), branches dont les extrémités sont réunies dans le levier à manche (40).

FIG.1

FIG.2

10

12

12

40

14

14

44

44

36

28

28

20

20

46

46

24

FIG.3

FIG. 4

FIG.6

22    20                    38    42

40                              36

34                                32

FIG.5

20    30
28

38    32

40

22

38

36

VI            VI

34

28    30

20